# EUROPÄISCHE PATENTSCHRIFT

(11) **EP 1 520 771 B1**
(45) Veröffentlichungstag und Bekanntmachung des Hinweises auf die Patenterteilung: **10.10.2007**
(21) Anmeldenummer: 04014300.0
(22) Anmeldetag: 18.06.2004
(51) Int. Cl.: B62D 35/02

(54) **Aerodynamisch ausgebildetes Verkleidungsteil für die Unterseite eines Kraftfahrzeuges, insbesondere Personenwagens**
Aerodynamic bottom cover for vehicle, more specifically for a car
Fond aérodynamique pour véhicule, en particulier une voiture

(30) Priorität: 30.09.2003 DE 10345328
(43) Veröffentlichungstag der Anmeldung: 06.04.2005
(73) Patentinhaber: Dr.Ing. h.c. F. Porsche Aktiengesellschaft, 70435 Stuttgart (DE)
(72) Erfinder: Rijsbergen, Markus, 71229 Leonberg (DE); Schmid, Markus, 71297 Moensheim (DE); Grammer, Martin, 71640 Ludwigsburg (DE)

(56) Entgegenhaltungen:
- EP-A- 1 013 540
- DE-U- 8 915 710
- DE-U- 29 720 872
- US-A- 4 805 747

## Beschreibung

Die Erfindung bezieht sich auf ein aerodynamisch ausgebildetes Verkleidungsteil für die Unterseite eines Kraftfahrzeuges, insbesondere Personenwagens mit einem benachbart einer Eintrittsöffnung angeordneten Luftführungselement, wobei im Fahrbetrieb ein Teilluftstrom der zwischen dem Verkleidungsteil und der Fahrbahn hindurchströmenden Kühlluft durch die Eintrittsöffnung und das zumindest bereichsweise oberhalb des Verkleidungsteiles liegende Luftführungselement zu einem darüberliegenden Aggregat und/oder Fahrwerksteil geleitet wird.

Ein derartiges Verkleidungsteil ist aus der DE 37 16 701 A1 bekannt. Bei dieser Anordnung wird das Luftführungselement durch ein benachbart der Eintrittsöffnung angeordnetes schaufelförmig ausgebildetes Halteelement gebildet, das einerseits am Verkleidungsteil und andererseits am darüberliegenden Getriebegehäuse befestigt ist. Diese doppelte Befestigung erfordert einen relativ großen Montageaufwand und ist sehr zeitintensiv.

Aufgabe der Erfindung ist es, ein mit einem Luftführungselement versehenes Verkleidungsteil für die Unterseite eines Kraftfahrzeuges so weiterzuentwickeln, dass die Befestigung zwischen dem Verkleidungsteil und dem Luftführungselement vereinfacht wird.

Erfindungsgemäß wird diese Aufgabe durch die Merkmale des Anspruchs 1 gelöst. Weitere die Erfindung in vorteilhafter Weise ausgestaltende Merkmale beinhalten die Unteransprüche.

Die mit der Erfindung hauptsächlich erzielten Vorteile sind darin zu sehen, dass durch die vorgeschlagene Schiebe-Rastverbindung zwischen dem Verkleidungsteil und dem Luftführungselement eine schnelle sichere Verbindung zwischen den beiden Bauteilen geschaffen wird. Zusätzliche Befestigungselemente wie Schrauben oder dgl. und Montagewerkzeuge werden nicht benötigt. Mit diesem Befestigungskonzept lassen sich unterschiedliche Luftführungselemente mit demselben Verkleidungsteil kombinieren, das heißt, es werden eine hohe geometrische Freiheit bei der Gestaltung der aerodynamisch wirksamen Bereiche sowie eine Variantenbildung mit identischer Grundgeometrie erzielt.

Durch die mehrfach wirkende lösbare Rastverbindung und die örtlich angeordneten Stützrippen wird eine spielfreie Verbindung zwischen beiden Bauteilen gewährleistet. Das eingesetzte Luftführungselement stützt sich im Befestigungsbereich abwechselnd an der Ober- und Unterseite des Verkleidungsteiles ab.

In der Zeichnung wird ein Ausführungsbeispiel der Erfindung näher erläutert.
Es zeigt
- Fig. 1: eine perspektivische Ansicht von schräg hinten auf einen Teilbereich eines Verkleidungsteiles für die Unterseite eines Kraftfahrzeuges mit dem Luftführungselement,
- Fig. 2: eine perspektivische Ansicht auf das Verkleidungsteil mit der Aufnahmeöffnung,
- Fig. 3: eine perspektivische Ansicht auf das Luftführungselement,

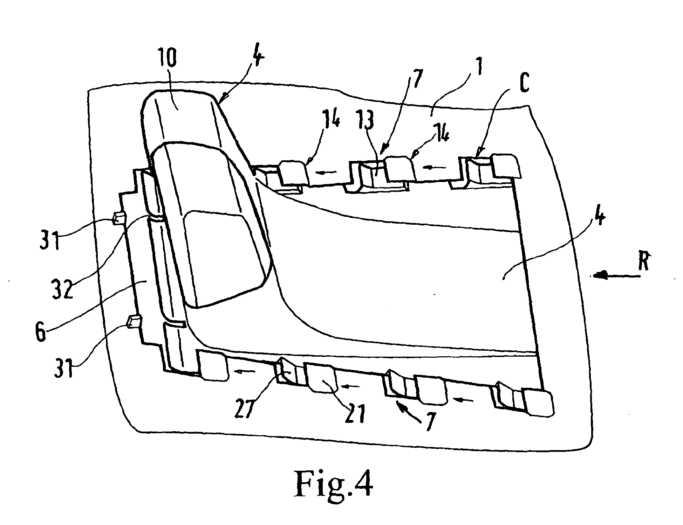

- Fig. 4: eine perspektivische Ansicht auf das Luftführungselement mit der Aufnahmeöffnung und dem eingesetzten Luftführungselement in einer Einführstellung,
- Fig. 5: eine perspektivische Ansicht ähnlich Fig. 4, jedoch in Montagestellung des Luftführungselementes,
- Fig. 6: einen Schnitt nach der Linie VI-VI der Fig. 5,
- Fig. 7: einen vertikalen Längsschnitt durch das Verkleidungsteil und das eingesetzte Luftführungselement in Montagestellung D.

Ein durch einen Personenwagen gebildetes, nicht näher dargestelltes Kraftfahrzeug ist an seiner Unterseite mit einem aerodynamisch ausgebildeten Verkleidungsteil 1 versehen. Das Verkleidungsteil 1 ist zu einer Fahrbahn hin vollständig glattflächig ausgebildet und in an sich bekannter Weise am darüber liegenden Aufbau in Lage gehalten. Es bedeckt vorzugsweise die gesamte Fahrzeugunterseite und kann ein- oder mehrteilig ausgebildet sein. Im Ausführungsbeispiel ist das vorzugsweise durch ein Spritzgußteil aus Kunststoff gebildete Verkleidungsteil 1 mehrteilig ausgebildet.

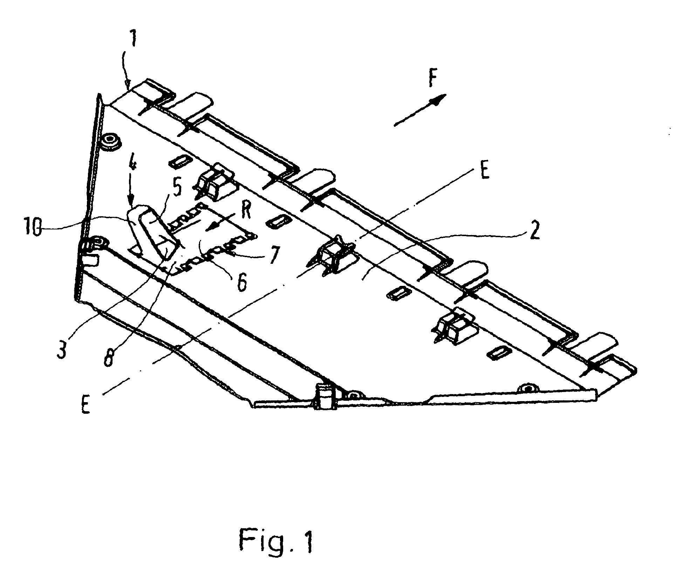

Fig. 1 zeigt einen heckseitigen Teilbereich 2 des Verkleidungsteiles 1, das sich im Ausführungsbeispiel entgegen der Fahrtrichtung F nach hinten hin verjüngt.
Das Verkleidungsteil 1 weist an seiner Unterseite örtlich zumindest eine Eintrittsöffnung 3 sowie ein Luftführungselement 4 auf, wobei im Fahrbetrieb des Kraftfahrzeuges ein Teilluftstrom A der zwischen dem Verkleidungsteil 1 und der Fahrbahn hindurchströmenden Kühlluft durch die Eintrittsöffnung 3 des Luftführungselementes 4 über eine am Luftführungselement 4 vorgesehene Austrittsöffnung 5 zu einem darüber liegenden Aggregat und/oder Fahrwerksteil geleitet wird und dieses kühlt. Im Ausführungsbeispiel wird Kühlluft zu einem nicht näher gezeigten Hinterachsgetriebe geführt.

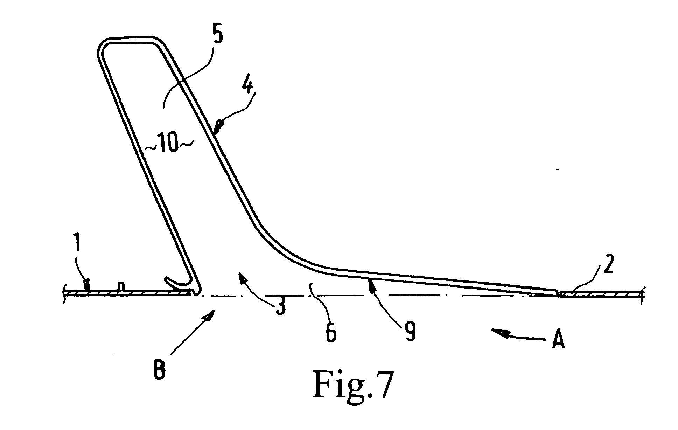

Das Luftführungselement 4 ist von der der Fahrbahn zugekehrten Seite B des Verkleidungsteiles 1, das heißt von der Unterseite her in eine Aufnahmeöffnung 6 des Verkleidungsteiles 1 eingesetzt (Einführstellung C) und über randseitig wirkende Schiebe-Rastverbindungen 7 lösbar mit dem Verkleidungsteil 1 verbunden. Die Eintrittsöffnung 3 ist gem. Fig. 7 am Luftführungselement 4 ausgebildet. Das ebenfalls durch ein Kunststoffspritzgußteil gebildete Luftführungselement 4 weist einen plattenförmigen Grundkörper 8 mit einem der Eintrittsöffnung 3 vorgelagerten Anströmkanal 9 auf, an den sich ein nach oben ragender Luftführungskanal 10 anschließt, der mit einer seitlichen Austrittsöffnung 5 versehen ist.

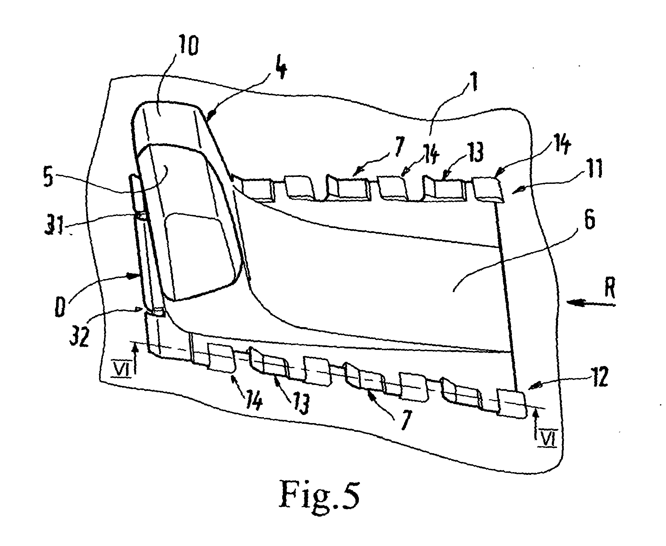

Die Schiebe-Rastverbindungen 7 umfassen an gegenüberliegenden Längsseiten 11, 12 des Luftführungselementes 4 ausgebildete Rastelemente 13, die mit randseitig an der Aufnahmeöffnung 6 des Verkleidungsteiles 1 vorgesehenen Halteabschnitten 14 verrastend zusammenwirken. Jedes Rastelement 13 des Luftführungselementes 4 steht in Montagestellung D mit zwei beabstandet angeordneten Halteabschnitten 14 des Verkleidungsteiles 1 in Wirkverbindung (Fig. 5).

Die Aufnahmeöffnung 6 ist gem. Fig. 1 seitlich versetzt zu einer Längsmittelebene E-E des Kraftfahrzeuges am Verkleidungsteil 1 angeordnet und weist in der Draufsicht gesehen eine etwa viereckige Grundform auf. Im Ausführungsbeispiel erstreckt sich die längliche Aufnahmeöffnung 6 in Fahrzeuglängsrichtung und ist etwa trapezförmig ausgebildet. Die beiden parallel zueinander verlaufenden Seiten 15, 16 sind in Fahrzeugquerrichtung ausgerichtet und bilden das vordere Ende bzw. das hintere Ende der Aufnahmeöffnung 6. Die schräg verlaufenden Seiten 17, 18 der Aufnahmeöffnung 6 erstrecken sich in Längsrichtung des Kraftfahrzeuges. Gemäß Figur 1 verjüngt sich die konische Aufnahmeöffnung 6 nach hinten hin zum Fahrzeugheck. Die Aufnahmeöffnung 6 könnte jedoch auch rechteckförmig oder dgl. ausgebildet sein.

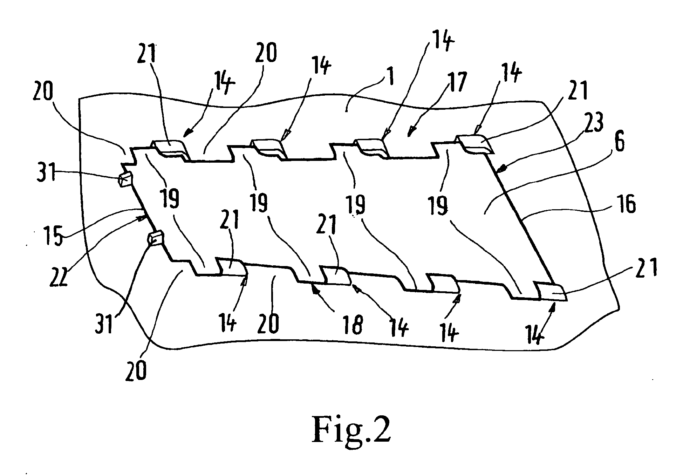

An gegenüberliegenden längsgerichteten Seiten 17, 18 der Aufnahmeöffnung 6 sind jeweils mehrere mit Abstand zueinander angeordnete Halteabschnitte 14 ausgebildet, wobei zwischen zwei angrenzenden Halteabschnitten 14 jeweils eine in der Draufsicht gesehen etwa U-förmige Ausnehmung 19 ausgebildet ist. Die entfernt vom vorderen und hinteren Rand der Aufnahmeöffnung 6 vorgesehenen Halteabschnitte 14 werden durch stufenförmig angeordnete hintereinanderliegende Haltelaschen 20, 21 gebildet. Die aneinandergesetzten Haltelaschen 20, 21 weisen zueinander einen Höhenversatz auf. Die Haltelaschen 20 verlaufen außenhautbündig mit dem Verkleidungsteil 1, wogegen die Haltelaschen 21 vom Verkleidungsteil 1 nach oben hin abgestellt sind. Benachbart dem vorderen Rand 22 der Aufnahmeöffnung 6 ist an beiden Längsseiten 17, 18 jeweils eine in der Ebene des Verkleidungsteiles 1 verlaufende Haltelasche 20 und benachbart dem hinteren Rand 23 der Aufnahmeöffnung 6 jeweils eine höher liegend angeordnete Haltelasche 21 ausgebildet (Fig. 2).

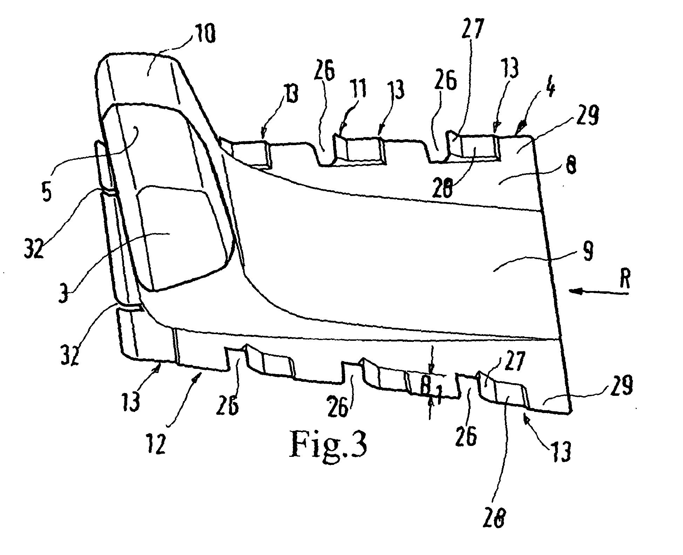

An beiden gegenüberliegenden sich in Längsrichtung des Kraftfahrzeuges erstreckenden Längsseiten 11, 12 des Luftführungselementes 4 sind jeweils mehrere in Längsrichtung mit Abstand zueinander angeordnete nach außen ragende Rastelemente 13 angeformt, wobei zwischen zwei angrenzenden Rastelementen 13 jeweils eine in der Draufsicht gesehen etwa U-förmige Aussparung 26 ausgebildet ist (Fig. 3).

Im Ausführungsbeispiel sind an beiden Längsseiten 11, 12 des Luftführungselementes 4 jeweils vier hintereinanderliegend angeordnete Rastelemente 13 vorgesehen (Fig. 3). Es können auch mehr oder weniger Rastelemente 13 pro Längsseite am Luftführungselement 4 angeordnet sein.

Jedes Rastelement 13 weist in Einschubrichtung R gesehen einen schräg nach oben ragenden Einführabschnitt 27, einen daran anschließenden ersten Abstützabschnitt 28 und einen nachfolgenden zweiten Abstützabschnitt 29 auf. Der zweite Abstützabschnitt 29 verläuft etwa bündig mit der Kontur des Verkleidungsteiles 1, wogegen der erste Abstützabschnitt 28 nach oben hin abgestellt ist. Die Rastelemente 13 weisen jeweils eine Längserstreckung L1 und eine Breite B1 auf (Fig. 3).

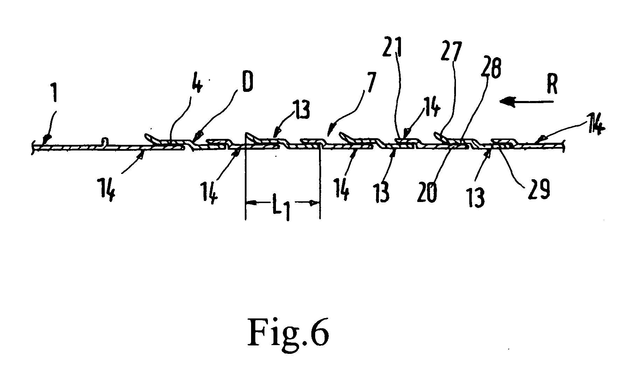

Bei eingesetztem Luftführungselement 4 liegt die Unterseite des ersten Abstützabschnitts 28 an der Oberseite der tieferliegenden Haltelasche 20 auf, wogegen die Oberseite des zweiten Abstützabschnitts 29 an der Unterseite der höherliegenden Haltelasche 21 anliegt (Fig. 6).

Am vorderen Rand der Unterseite des ersten Abstützbereichs 28 und am hinteren Rand der Oberseite des zweiten Abstützbereichs 29 der Rastelemente 13 ist jeweils eine querverlaufende vorstehende noppenartige Abstützrippe ausgebildet (nicht näher dargestellt). Durch diese Maßnahme wird eine spiel- und klapperfreie Verbindung zwischen dem Luftführungselement 4 und dem Verkleidungsteil 1 geschaffen. Benachbart dem Rand der Aufnahmeöffnung 6 ist an der der Fahrbahn abgekehrten Seite des Verkleidungsteiles 1 zumindest eine sich in Längsrichtung erstreckende Führungsrippe 31 vorgesehen, die in Montagestellung D mit einer Schlitzöffnung 32 des Luftführungselementes 4 in Wirkverbindung steht (Fig. 2 und 3).

Die Montage des Luftführungselementes 4 erfolgt folgendermaßen: Zuerst wird das Luftführungselement 4 von unten her in die Aufnahmeöffnung 6 des Verkleidungsteiles 1 eingesetzt. Die Einführstellung C ist dann erreicht, wenn sämtliche Einführzungen 27 des Luftführungselementes 4 in den Bereich der Ausnehmungen 19 hineinragen. Beim nachfolgenden Verschieben des Luftführungselementes 4 in Einschubrichtung R stützen sich zuerst die Einführzungen 27 an der Oberseite der Halteabschnitte ab. Durch weiteres Längsverschieben des Luftführungselementes 4 in Einschubrichtung R werden die Rastverbindungen 7 gebildet und das Luftführungselement 4 nimmt seine Montagestellung D ein.

## Patentansprüche

1. Aerodynamisch ausgebildetes Verkleidungsteil (1) für die Unterseite eines Kraftfahrzeuges, insbesondere Personenwagens mit einem benachbart einer Eintrittsöffnung (3) angeordneten Luftführungselement (4) wobei im Fahrbetrieb ein Teilluftstrom der zwischen dem Verkleidungsteil (1) und der Fahrbahn hindurchströmenden Kühlluft durch die Eintrittsöffnung (3) und das zumindest bereichsweise oberhalb des Verkleidungsteiles liegende Luftführungselement (4) zu einem darüber liegenden Aggregat und/oder Fahrwerksteil geleitet wird, **dadurch gekennzeichnet, dass** das Luftführungselement (4) in eine Aufnahmeöffnung (6) des Verkleidungsteiles (1) eingesetzt und über Schiebe-Rastverbindungen (7) mit dem Verkleidungsteil (1) verbunden ist.

2. Verkleidungsteil nach Anspruch 1, **dadurch gekennzeichnet, dass** die Eintrittsöffnung (3) am Luftführungselement (4) ausgebildet ist.

3. Verkleidungsteil nach den Ansprüchen 1 und 2 **dadurch gekennzeichnet, dass** das Luftführungselement (4) einen plattenförmigen Grundkörper (8) mit einem der Eintrittsöffnung (3) vorgelagerten Anströmkanal (9) aufweist, an den sich ein nach oben ragender Luftführungskanal (10) anschließt, der mit einer Austrittsöffnung (5) versehen ist.

4. Verkleidungsteil nach Anspruch nach Anspruch 1, **dadurch gekennzeichnet, dass** die Schiebe-Rastverbindungen (7) an gegenüberliegenden Seiten (11, 12) des Luftführungselementes (4) ausgebildete Rastelemente (13) umfassen, die mit randseitig an der Aufnahmeöffnung (6) des Verkleidungsteiles (1) vorgesehenen Halteabschnitten (14) verrastend zusammenwirken.

5. Verkleidungsteil nach Anspruch 4, **dadurch gekennzeichnet, dass** jedes Rastelement (13) des Luftführungselementes (4) mit zwei beabstandet angeordneten Halteabschnitten (14) des Verkleidungsteiles (1) in Wirkverbindung steht.

6. Verkleidungsteil nach Anspruch 1, **dadurch gekennzeichnet, dass** das Luftführungselement (4) von der der Fahrbahn zugekehrten Seite (B) des Verkleidungsteiles (1) her in die Aufnahmeöffnung (6) eingesetzt ist.

7. Verkleidungsteil nach Anspruch 1, **dadurch gekennzeichnet, dass** die Aufnahmeöffnung (6) in der Draufsicht gesehen eine viereckige, vorzugsweise rechteckige oder trapezförmige Grundform aufweist.

8. Verkleidungsteil nach einem der vorangegangenen Ansprüche, **dadurch gekennzeichnet, dass** sich zwei längeren gegenüberliegenden Seiten (17, 18) der Aufnahmeöffnung (6) in Fahrzeuglängsrichtung des Kraftfahrzeuges erstrecken.

9. Verkleidungsteil nach einem der vorangegangenen Ansprüche, **dadurch gekennzeichnet, dass** sich die Aufnahmeöffnung (6) konisch verjüngt.

10. Verkleidungsteil nach Anspruch 8, **dadurch gekennzeichnet, dass** an gegenüberliegenden Seiten (17, 18) der Aufnahmeöffnung (6) jeweils mehrere mit Abstand zueinander angeordnete Halteabschnitte (14) ausgebildet sind, wobei zwischen zwei angrenzenden Halteabschnitten (14) jeweils eine - in der Draufsicht gesehen - etwa U-förmige Ausnehmung (19) ausgebildet ist.

11. Verkleidungsteil nach Anspruch 10, **dadurch gekennzeichnet, dass** die entfernt vom vorderen und hinteren Rand der Aufnahmeöffnung (6) vorgesehenen Halteabschnitte (14) jeweils durch stufenförmig angeordnete hintereinanderliegende Haltelaschen (20, 21) gebildet werden, wobei die Haltelaschen (20) außenhautbündig mit dem Verkleidungsteil (1) verlaufen, wogegen die Haltelaschen (21) vom Verkleidungsteil (1) nach oben hin abgestellt sind.

12. Verkleidungsteil nach Anspruch 4, **dadurch gekennzeichnet, dass** an beiden gegenüberliegenden Längsseiten (11, 12) des Luftführungselementes (4) jeweils mehrere mit Abstand zueinander angeordnete nach außen ragende Halteelemente (13) angeformt sind, wobei zwischen zwei angrenzenden Halteelementen (13) jeweils eine in der Draufsicht gesehen etwa U-förmige Aussparung (26) vorgesehen ist.

13. Verkleidungsteil nach Anspruch 4, **dadurch gekennzeichnet, dass** jedes Rastelement (13) einen schräg nach oben ragenden vorderen Einführabschnitt (27), einen daran anschließenden ersten Abstützabschnitt (28) und einen nachfolgenden zweiten Stützabschnitt (29) aufweist, wobei der zweite Abstützabschnitt (29) bündig mit dem Verkleidungsteil (1) verläuft.

14. Verkleidungsteil nach Anspruch 13, **dadurch gekennzeichnet, dass** bei eingesetztem Luftführungselement (4) die Unterseite des ersten Abstützabschnitts (28) an der Oberseite der tieferliegenden Haltelasche (20) abstützt, wogegen die Oberseite des zweiten Abstützabschnitts (29) an der Unterseite der höherliegenden Haltelasche (21) aufliegt.

15. Verkleidungsteil nach Anspruch 13, **dadurch gekennzeichnet, dass** am vorderen Rand der Unterseite des ersten Abstützbereichs (28) und am hinteren Rand der Oberseite des zweiten Abstützbereichs (29) der Rastelemente (13) jeweils eine querverlaufende vorstehende noppenartige Abstützrippe ausgebildet ist.

16. Verkleidungsteil nach einem der vorangegangenen Ansprüche, **dadurch gekennzeichnet, dass** benachbart dem Rand der Aufnahmeöffnung (6) an der Innenseite des Verkleidungsteiles (1) zumindest eine sich in Längsrichtung erstreckende Führungsrippe (31) erstreckt, die mit einer Schlitzöffnung (32) des Luftführungselementes (4) in Wirkverbindung steht.

## Claims

1. An aerodynamically shaped covering part (1) for the underside of a motor vehicle, in particular a passenger car, with an air-guiding element (4) arranged adjacent to an inlet opening (3), wherein during the travelling operation a partial air flow of the cooling air flowing through between the covering part (1) and the roadway is guided through the inlet opening (3) and the air-guiding element (4) situated at least in part above the covering part towards a unit and/or part of the undercarriage situated above it, **characterized in that** the air-guiding element (4) is inserted in a receiving opening (6) in the covering part (1) and is connected to the covering part (1) by way of sliding lock-in fastening means (7).

2. A covering part according to Claim 1, **characterized in that** the inlet opening (3) is formed on the air-guiding element (4).

3. A covering part according to Claims 1 and 2, **characterized in that** the air-guiding element (4) has a plate-shaped main body (8) with an inflow duct (9) which is positioned in front of the inlet opening (3) and which is adjoined by an air-guiding duct (10) which projects upwards and which is provided with an outlet opening (5).

4. A covering part according to Claim 1, **characterized in that** the sliding lock-in fastening means (7) comprise lock-in elements (13) which are formed on opposite sides (11, 12) of the air-guiding element (4) and which co-operate in a locking manner with holding portions (14) provided on the edge of the receiving opening (6) in the covering part (1).

5. A covering part according to Claim 4, **characterized in that** each lock-in element (13) of the air-guiding element (4) is operatively connected to two holding portions (14) of the covering part (1) arranged at a distance from each other.

6. A covering part according to Claim 1, **characterized in that** the air-guiding element (4) is inserted into the receiving opening (6) from the side (B) of the covering part (1) facing the roadway.

7. A covering part according to Claim 1, **characterized in that** the receiving opening (6) has a quadrangular, and preferably rectangular or trapezoidal, basic shape as seen in plan view.

8. A covering part according to any one of the preceding Claims, **characterized in that** two longer opposite sides (17, 18) of the receiving opening (6) extend in the longitudinal direction of the motor vehicle.

9. A covering part according to any one of the preceding Claims, **characterized in that** the receiving opening (6) tapers in a conical manner.

10. A covering part according to Claim 8, **characterized in that** a plurality of holding portions (14) arranged at a distance from one another are formed in each case on opposite sides (17, 18) of the receiving opening (6), wherein a substantially U-shaped recess (19) - as seen in plan view - is formed in each case between two adjacent holding portions (14).

11. A covering part according to Claim 10, **characterized in that** the holding portions (14) provided at a distance from the front and rear edges of the receiving opening (6) are formed in each case by holding plates (20, 21) arranged in a stepped manner and situated one behind the other, wherein the holding plates (20) extend flush on their outer skins with the covering part (1), whereas the holding plates (21) project upwards from the covering part (1).

12. A covering part according to Claim 4, **characterized in that** a plurality of holding elements (13) arranged at a distance from one another and projecting outwards are formed in an integral manner on the two opposite longitudinal sides (11, 12) of the air-guiding element (4) in each case, wherein a substantially U-shaped recess (26) - as seen in plan view - is provided in each case between two adjacent holding elements (13).

13. A covering part according to Claim 4, **characterized in that** each lock-in element (13) has a front insertion portion (27) projecting obliquely upwards, a first support portion (28) adjoining the latter and a following second support portion (29), wherein the second support portion (29) extends flush with the covering part (1).

14. A covering part according to Claim 13, **characterized in that** when the air-guiding element (4) is inserted the underside of the first support portion (28) is supported on the top side of the holding plate (20) situated at a lower level, whereas the top side of the second support portion (29) rests against the underside of the holding plate (21) situated at a higher level.

15. A covering part according to Claim 1, **characterized in that** a transversely extending, projecting knob-like support rib is formed in each case on the front edge of the underside of the first support region (28) and on the rear edge of the top side of the second support region (29) of the lock-in elements (13).

16. A covering part according to any one of the preceding Claims, **characterized in that** at least one guide rib (31), which extends in the longitudinal direction and which is operatively connected to a slot opening (32) in the air-guiding element (4), extends adjacent to the edge of the receiving opening (6) on the inner side of the covering part (1).

## Revendications

1. Partie d'habillage (1) conçue de façon aérodynamique pour le coté inférieur d'un véhicule, en particulier d'une voiture de tourisme avec un élément de guidage d'air (4) disposé à proximité d'une ouverture d'entrée (3), un flux d'air partiel de l'air de refroidissement circulant entre la partie d'habillage (1) et la chaussée étant guidé pendant le roulement à travers l'ouverture d'entrée (3) et l'élément de guidage d'air (4) disposé au moins par endroits au-dessus de la partie d'habillage vers un ensemble et/ou une partie de train de roulement situé(e) au-dessus, **caractérisée en ce que** l'élément de guidage d'air (4) est inséré dans une ouverture de logement (6) de la partie d'habillage (1) et est relié à la partie d'habillage (1) au moyen de liaisons à encliquetage et coulissement (7).

2. Partie d'habillage selon la revendication 1, **caractérisée en ce que** l'ouverture d'entrée (3) est réalisée sur l'élément de guidage d'air (4).

3. Partie d'habillage selon les revendications 1 et 2, **caractérisée en ce que** l'élément de guidage d'air (4) présente un corps de base (8) en forme de plaque avec un canal d'arrivée de courant (9) placé en amont de l'ouverture d'entrée (3), auquel se raccorde un canal de guidage d'air (10) dépassant vers le haut, lequel est doté d'une ouverture de sortie (5).

4. Partie d'habillage selon la revendication 1, **caractérisée en ce que** les liaisons à encliquetage et coulissement (7) comprennent des éléments d'encliquetage (13) conçu sur des cotés opposés (11, 12) de l'élément de guidage d'air (4), lesquels éléments coopèrent par encliquetage avec des parties de retenue (14) prévues coté bord sur l'ouverture de logement (6) de la partie d'habillage (1).

5. Partie d'habillage selon la revendication 4, **caractérisée en ce que** chaque élément d'encliquetage (13) de l'élément de guidage d'air (4) est en liaison active avec deux parties de retenue (14), disposées de façon espacée, de la partie d'habillage (1).

6. Partie d'habillage selon la revendication 1, **caractérisée en ce que** l'élément de guidage d'air (4) est inséré par le coté (B), tourné vers la chaussée, de la partie d'habillage (1) dans l'ouverture de logement (6).

7. Partie d'habillage selon la revendication 1, **caractérisée en ce que** l'ouverture de logement (6) présente en vue de dessus une forme de base carrée, de préférence rectangulaire ou trapézoïdale.

8. Partie d'habillage selon l'une quelconque des revendications précédentes, **caractérisée en ce que** deux cotés (17, 18), plus longs et se faisant face, de l'ouverture de logement (6) s'étendent dans la direction longitudinale du véhicule.

9. Partie d'habillage selon l'une quelconque des revendications précédentes, **caractérisée en ce que** l'ouverture de logement (6) se rétrécit en forme de cône.

10. Partie d'habillage selon la revendication 8, **caractérisée en ce que** sur chacun des cotés (17, 18) se faisant face de l'ouverture de logement (6) sont réalisées plusieurs parties de retenue (14) disposées à distance les unes des autres, à chaque fois un évidement (19) à peu près en forme de U, en vue de dessus, étant réalisé entre deux parties de retenue (14) contiguës.

11. Partie d'habillage selon la revendication 10, **caractérisée en ce que** les parties de retenue (14) prévues à distance du bord avant et du bord arrière de l'ouverture de logement (6) sont formées à chaque fois par des pattes de retenue (20, 21) situées les unes derrière les autres et disposées en forme de marche, les pattes de retenue (20) étant agencées au même niveau que l'enveloppe extérieure avec la partie d'habillage (1), alors que les pattes de retenue (21) sont dirigées vers le haut à partir de la partie d'habillage (1).

12. Partie d'habillage selon la revendication 4, **caractérisée en ce que** sur chacun des deux cotés longitudinaux (11, 12) se faisant face de l'élément de guidage d'air (4) sont formés plusieurs éléments de retenue (13) disposés à distance les uns des autres et dépassant vers l'extérieur, un évidement (26) à peu près en forme de U en vue de dessus étant prévu à chaque fois entre deux éléments de retenue (13) contiguës.

13. Partie d'habillage selon la revendication 4, **caractérisée en ce que** chaque élément de guidage (13) présente une partie d'introduction (27) avant, dépassant en biais vers le haut, une première partie de soutien (28) se raccordant à l'autre partie et une seconde partie de soutien (29) se raccordant à la première partie, la seconde partie de soutien (29) étant agencée au même niveau que la partie d'habillage (1).

14. Partie d'habillage selon la revendication 13, **caractérisée en ce que**, lorsque l'élément de guidage d'air (4) est inséré, le coté inférieur de la première partie de soutien (28) s'appuie sur le coté supérieur de la patte de retenue (20) située plus bas, alors que le coté supérieur de la seconde partie de soutien (29) repose sur le coté inférieur de la patte de retenue (21) située plus haut.

15. Partie d'habillage selon la revendication 13, **caractérisée en ce que** sur le bord avant du coté inférieur de la première partie de soutien (28) et sur le bord arrière du côté supérieur de la seconde zone de soutien (29) des éléments d'encliquetage (13) est réalisée à chaque fois une nervure de soutien en forme de nope, saillante et agencée en travers.

16. Partie d'habillage selon l'une quelconque des revendications précédentes, **caractérisée en ce qu'**à proximité du bord de l'ouverture de logement (6), sur le coté intérieur de la plaque d'habillage (1) s'étend au moins une nervure de grillage (31) s'étendant dans le sens longitudinal, laquelle est en liaison active avec une ouverture à fente (32) de l'élément de guidage d'air (4).
